(19) Europäisches Patentamt
European Patent Office
Office européen des brevets

(11) EP 4 033 213 A1

(12) EUROPEAN PATENT APPLICATION

(43) Date of publication:
27.07.2022 Bulletin 2022/30

(21) Application number: 21185969.9

(22) Date of filing: 16.07.2021

(51) International Patent Classification (IPC):
G01K 7/42 (2006.01)

(52) Cooperative Patent Classification (CPC):
G01K 7/427; G01K 2213/00

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.01.2021 IT 202100001442

(71) Applicant: Megaride S.r.l.
80141 Napoli (IT)

(72) Inventors:
• Sakhnevych, Aleksandr
80141 Napoli (IT)
• Farroni, Flavio
80127 Napoli (IT)
• Timpone, Francesco
80125 Napoli (IT)

(74) Representative: Conversano, Gabriele
Laforgia, Bruni & Partners srl
Via Michele Garruba, 3
70122 Bari (IT)

(54) **DEVICE FOR ESTIMATING TEMPERATURE PROFILE INSIDE AND ALONG THE THICKNESS OF A TIRE**

(57)     Device for measuring the temperature distribution inside a tire of a land vehicle provided with a plurality of tires, comprising, mounted in a land vehicle: a couple of temperature sensors for each tire, configured to detect the tire outer and inner surface temperature; a central hardware unit, configured to acquire the data detected by said temperature sensors and to acquire the vehicle speed from the gearcases in said vehicle, characterized in that said central unit is also configured: to process a heat exchange model relating to the tire and to output a tire inner temperature distribution.

Fig. 1

## Description

### Technical field

The present invention relates to a hardware device, provided with electronic means on which computer programs are loaded that implement a specific software logic, configured to evaluate the temperature inside the inflation chamber and in the inner layers of a tire structure, in real time during the functioning of a land vehicle.

In particular, object of the present invention is a device that can be mounted in a vehicle.

The need to evaluate the inner temperature of a tire comes from many needs linked in particular to the optimization of the tire performance in terms of exploiting its adhesion with the road, both to improve the road safety and to optimize the performance in the field of car racing. In fact, the temperature represents one of the main variability factors of the tire behaviour, since it modifies the behaviours both of their inner structure and of the polymer mixes adopted in the tread.

Knowing the temperature profile in real time and in the whole thickness between the outside of the tread and the surface in contact to the inflation gases (called inner liner) represents an important competitive advantage both to manage the usage of the tires optimally and to provide important information functional to the design of new tire models.

### State of the art

Even if it is possible to measure, by means of suitable sensors, the temperature outside the tread and the inner liner, it is almost impossible to know continuously and reliably the temperature distribution in the material thickness between inner and outer surface.

Yet, many studies highlight that among the temperatures able to provide a more significant correlation with the road adhesion there is the "tread core" one, which cannot be evaluated by means of direct measuring tools.

Moreover, the temperatures of the "tread base" and inner carcass, also not directly measurable, result highly connected to the whole tire rigidity variations, in turn fundamental to determine the vehicle behaviour in terms of handling and driving comfort.

At the state of the art, some methods are known for measuring the tire mix inner temperature. A first example is shown in document CN105034716; a second example is shown in document CN204820978. Anyway, both these documents describe methods in which one or more temperature sensors are buried in the rubber constituting the tire various layers. It is clear that this method implies considerable production complications and implementation costs. Moreover, the sensors installed are linked to the single tire, and so, have a very short useful life.

### Aim of the invention

So, aim of the present invention is to provide a device that allows to evaluate the temperature inner distribution in the various layers of a tire, which does not need to mount any sensor in the tire mix.

### Detailed description of the invention

In the following, it is referred to the structure of a tire, intended as a plurality of overlapped layers from the inside out.

Generally, starting from the inside out of a tire there are:

- a first layer called inner liner;
- a series of circumferentially overlapping plies, (known as belt plies), forming an area often defined "carcass";
- the tread.

Generally, the inner liner and the tread are also provided with a side surface or "shoulder", while the interposed layers are generally only circumferential.

It is clear that the just described one is a general and not comprehensive description of a tire which can be mounted in a vehicle provided with a device according to the invention.

The device according to the present invention comprises, mounted in a land vehicle provided with a plurality of tires:

- at least a couple of temperature sensors for each tire, of which the temperature distribution is to be measured, configured to detect the tire outer and inner surface temperature, respectively. Preferably, said sensors are sensors of optical kind, able to measure in contactless manner.
- a central hardware unit, configured to acquire the data detected by said temperature sensors.

Preferably, the connection between said sensors and said central unit is of wireless kind and does not need cables.

Said hardware unit is also configured to acquire at least the following data from the onboard gearcases of the vehicle:

- the vehicle speed (possibly calculated by means of the tire angular velocities and the wheels rolling radii);
- the yaw velocity;
- the accelerations along 3 main directions,
- the steering angle.

Preferably, moreover, said hardware unit is configured to acquire from said onboard gearcases also the values of the velocity components in the two orthogonal directions, parallel to the roadway. Preferably, moreover the device comprises a sensor for measuring the inner pressure of each tire, configured to send the detected pressure value to said central unit.

The device is characterized in that said central unit is configured:

- to acquire the values of inner, outer surface temperature of each tire, acquired by said temperature sensors;
- to acquire from said gearcases mounted in the vehicle the values of:
- vehicle speed (or alternatively tire angular velocities and wheels rolling radii);
- yaw velocity;
- accelerations along 3 main directions,
- steering angle.
- to process a heat exchange model relating to the tire, by using a physical model based on the equations of heat diffusion applied in real time to a tridimensional domain.

In a preferred embodiment, said equations are schematized in the following:

$$\frac{\partial T}{\partial t} = \frac{\dot{q_G}}{\rho * c_v} + \frac{div(k * \nabla T)}{\rho * c_v}$$

- to output a tire inner temperature distribution. Said central unit is also configured to acquire, if possible, the inflation pressure of each tire.

To such aim, on said hardware unit computer programs are loaded, configured to solve a physical model able to describe the thermodynamics of each tire, optimized for a real-time use, linked to the adoption in the field of onboard control logics and algorithms for safety and maximization of tire performance.

To such aim, on said central unit geometrical and structural data are also loaded, relating to each tire.

Said geometrical and structural data comprise the tire dimensions and the features of each layer thereof, in terms of materials, widths and thicknesses. Moreover, on said central unit parameters are loaded that describe the physical behaviour of each material constituting each layer of said tire, such for example the thermal conductivity and the specific heat.

Said physical model is a model containing equations that describe the energy exchanges of a tridimensional physical object with a plurality of layers overlapping to each other which interacts with the environment in a first and second interface.

Said central unit is configured:

- to set up the boundary conditions of said physical model at said first interface as a function of the acquired values of vehicle speed and wheels rolling speed;
- to set up the boundary conditions of said physical model at said second interface as a function of the pressure and temperature values measured inside said tire;
- to calculate the heat generated by friction at the interface between tire and road, defined by the "friction power" (where A represents the measure of the ground footprint of the tire)

$$FP = \frac{F_x \cdot v_x + F_y \cdot v_y}{A}$$

As a function of the inflation pressure and rolling speed;

- to calculate the heat generated by hysteresis ("strain energy loss" ) *SEL = f (F, ω, γ, Pi)*, inside the tire as a function of the structural features of said tire;
- to calculate the heat subtracted by convection from the gases provided inside the tire;
- to calculate the heat subtracted by convection from the air flow interesting the tire outer surface;
- to calculate the heat exchanged by convection between the various layers constituting the tire;
- to output the values of average and local temperatures of inner and outer interface of each layer of the tire, so that all the heat exchange equations are satisfied and so that the tire surface temperature and the tire inner temperature differ from the temperatures measured by means of said sensors by an amount lower than a predetermined tolerability threshold;
- to output the average inner temperature distribution of each layer of the tire, obtained by using suitably physical formulations deriving from the application of the Fourier equations, implemented for a tridimensional domain and optimized for real time use conditions.

More in particular, said central unit is configured to carry out the just described steps cyclically and at the end of each execution to update said distribution of the average inner temperatures of each layer of the tire.

## Claims

1. Device for measuring the temperature distribution inside a tire of a land vehicle provided with a plurality of tires, comprising, mounted in a land vehicle:

   - a couple of temperature sensors for each tire, configured to detect the tire outer and inner surface temperature,
- a central hardware unit, configured to acquire the data detected by said temperature sensors and to acquire from the gearcases in said vehicle:
- the vehicle speed;

**characterized in that** said central unit is also configured:

- to process a heat exchange model relating to the tire,
- to output a tire inner temperature distribution.

2. Device according to claim 1, **characterized in that** on said hardware unit computer programs are loaded, configured to solve a physical model able to describe the thermodynamics of each tire.

3. Device according to claim 2, **characterized in that** on said central unit geometrical and structural data are also loaded, relating to each tire.

4. Device according to claim 3, **characterized in that** said physical model is a model containing equations that describe the energy exchanges of a tridimensional physical object with a plurality of layers overlapping to each other which interacts with the environment in a first and second interface.

5. Device according to claim 4, **characterized in that** said central unit is configured:

- to set up the boundary conditions of said physical model at said first interface as a function of the acquired values of vehicle speed and wheels rolling speed;
- to set up the boundary conditions of said physical model at said second interface as a function of the pressure and temperature values measured inside said tire;
- to calculate the heat generated by friction at the interface between tire and road, as a function of the inflation pressure and rolling speed;
- to calculate the heat generated by hysteresis inside the tire as a function of the structural features of said tire;
- to calculate the heat subtracted by convection from the gases provided inside the tire;
- to calculate the heat subtracted by convection from the air flow interesting the tire outer surface;
- to calculate the heat exchanged by convection between the various layers constituting the tire;
- to output the values of average temperatures of inner and outer interface of each layer of the tire, so that all the heat exchange equations are satisfied and so that the tire surface temperature and the tire inner temperature differ from the temperatures measured by means of said sensors by an amount lower than a predetermined tolerability threshold;
- to output the average inner temperature distribution of each layer of the tire, obtained as linear interpolation between the two inner and outer surface temperatures.

6. Device according to claim 5, **characterized in that** said central unit is configured to carry out the just described steps cyclically and at the end of each execution to update said distribution of the average inner temperatures of each layer of the tire.

7. Device according to any one of the preceding claims, **characterized in that** said sensors are sensors of optical kind, able to measure in contactless manner, and **in that** the connection between said sensors and said central unit is of wireless kind and does not need cables.

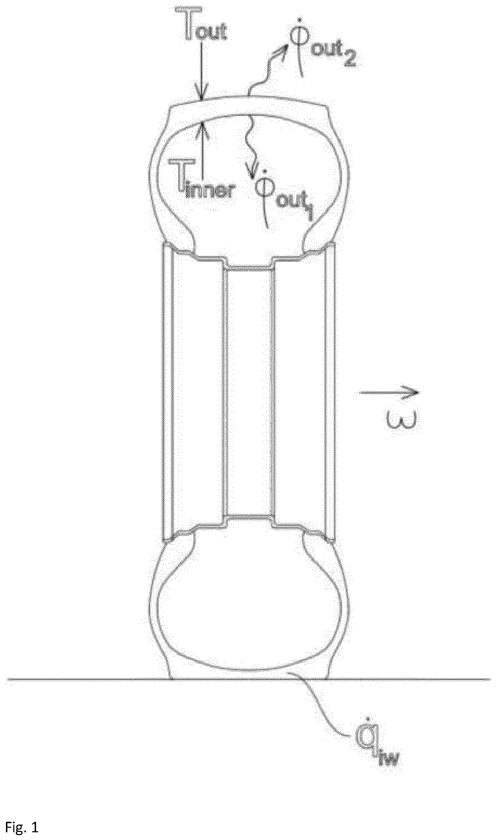

Fig. 1

Europäisches
Patentamt

European
Patent Office

Office européen
des brevets

# EUROPEAN SEARCH REPORT

Application Number

EP 21 18 5969

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/150283 A1 (SHICK BERNHARD [DE] ET AL) 14 July 2005 (2005-07-14)<br>* abstract *<br>* paragraphs [0001], [0024], [0025], [0026], [0032], [0037], [0050], [0054], [0055], [0060], [0110], [0111] – [0137] *<br>* figures 1,3,4,5,6,7,8 *<br>----- | 1-7 | INV.<br>G01K7/42 |
| A | EP 2 957 440 A1 (GOODYEAR TIRE & RUBBER [US]) 23 December 2015 (2015-12-23)<br>* the whole document *<br>----- | 1-7 | |

**TECHNICAL FIELDS
SEARCHED      (IPC)**

G01K

The present search report has been drawn up for all claims

| Place of search | Date of completion of the search | Examiner |
|---|---|---|
| The Hague | 9 December 2021 | Bagnera, Carlo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
..........................................................................................
& : member of the same patent family, corresponding
document

EPO FORM 1503 03.82 (P04C01)

**EP 4 033 213 A1**

## ANNEX TO THE EUROPEAN SEARCH REPORT
## ON EUROPEAN PATENT APPLICATION NO.

EP 21 18 5969

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2021

| Patent document cited in search report | | Publication date | Patent family member(s) | | Publication date |
|---|---|---|---|---|---|
| US 2005150283 | A1 | 14-07-2005 | AT | 274420 T | 15-09-2004 |
| | | | AT | 355189 T | 15-03-2006 |
| | | | AU | 2003222838 A1 | 10-11-2003 |
| | | | DE | 10218781 A1 | 13-11-2003 |
| | | | EP | 1356957 A2 | 29-10-2003 |
| | | | EP | 1499508 A1 | 26-01-2005 |
| | | | ES | 2227494 T3 | 01-04-2005 |
| | | | JP | 4242200 B2 | 18-03-2009 |
| | | | JP | 2003320827 A | 11-11-2003 |
| | | | JP | 2005528270 A | 22-09-2005 |
| | | | US | 2003201044 A1 | 30-10-2003 |
| | | | US | 2005150283 A1 | 14-07-2005 |
| | | | WO | 03091046 A1 | 06-11-2003 |
| EP 2957440 | A1 | 23-12-2015 | EP | 2957440 A1 | 23-12-2015 |
| | | | US | 2015360525 A1 | 17-12-2015 |

EPO FORM P0459

For more details about this annex : see Official Journal of the European Patent Office, No. 12/82

7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 105034716

- CN 204820978